# EUROPÄISCHE PATENTSCHRIFT

(11) **EP 1 996 446 B1**
(45) Veröffentlichungstag und Bekanntmachung des Hinweises auf die Patenterteilung: **07.10.2009**
(21) Anmeldenummer: 07703371.0
(22) Anmeldetag: 09.02.2007
(51) Int. Cl.: B62D 33/067

(54) **LASTKRAFTWAGEN MIT EINER VORDEREN FAHRERHAUSLAGERUNG**
LORRY WITH FRONT MOUNTING OF THE DRIVER'S CAB
POIDS-LOURD ÉQUIPÉ D'UN SUPPORT AVANT DE CABINE DE CONDUCTEUR

(30) Priorität: 22.02.2006 DE 102006008090
(43) Veröffentlichungstag der Anmeldung: 03.12.2008
(73) Patentinhaber: Daimler AG, 70327 Stuttgart (DE)
(72) Erfinder: EBINGER, Christian, 72144 Dusslingen (DE); MERKEL, Martin, 71139 Ehningen (DE); SCHNEIDER, Susanne, 71069 Sindelfingen (DE)
(74) Vertreter: JENSEN & SON
(86) Internationale Anmeldenummer: PCT/EP2007/001097
(87) Internationale Veröffentlichungsnummer: WO 2007/096060

(56) Entgegenhaltungen:
- EP-A1- 0 798 198
- EP-A2- 0 972 700
- DE-A1- 19 733 417
- DE-C1- 10 221 346

## Beschreibung

Die Erfindung betrifft einen Lastkraftwagen mit einer vorderen Fahrerhauslagerung eines Fahrerhauses an einem Fahrzeugrahmen der im Oberbegriff des Patentanspruchs 1 angegebenen Art.

Ein derartiger Lastkraftwagen ist bereits aus der EP 0 972 700 A2 als bekannt zu entnehmen, bei der ein Fahrerhaus über eine Stabilisatorschwinge an einem Fahrzeugrahmen abgestützt ist. Die Stabilisatorschwinge umfasst dabei ein am vorderen Ende des Fahrerhauses verlaufendes Stabilisatorrohr sowie zwei seitlich von diesem nach hinten abragende Stabilisatorarme, welche fest mit dem Stabilisatorrohr verbunden sind. Im Eckbereich zwischen dem Stabilisatorrohr und dem jeweils zugeordneten Stabilisatorarm ist jeweils das obere Ende eines Feder-Dämpfer-Elements angelenkt, über welche die Stabilisatorschwinge bzw. das Fahrerhaus an seinem vorderen Ende federnd gelagert ist. An ihrem jeweils hinteren Ende sind die beiden seitlichen Stabilisatorarme über ein jeweiliges Lagerauge an einem zugehörigen Lagerbock angelenkt, der oberseitig eines zugeordneten Rahmenlängsträgers des Fahrzeugrahmens befestigt ist. Um im Falle eines Frontalaufpralls des Lastkraftwagens im Bereich des Fahrerhauses - also im Wesentlichen oberhalb des Fahrzeugrahmens - insbesondere die in Fahrzeuglängsrichtung nach hinten wirkende Aufprallenergie aufnehmen zu können, sind die beiden Lagerkonsolen nachgiebig am Fahrzeugrahmen befestigt und/oder als energieabsorbierende Einrichtungen ausgebildet. Trifft demgemäß der Lastkraftwagen mit seinem Fahrerhaus bei einer Frontalkollision auf einen anderen LKW auf, so wird die über die Stabilisatorschwinge eingeleitete Aufprallenergie im Bereich der seitlichen Lagerböcke aufgenommen.

Als nachteilig bei dieser bekannten energieabsorbierenden Einrichtung ist jedoch der Umstand anzusehen, dass die an sich sehr einfachen Lagerböcke im vorliegenden Fall äußerst aufwändig gestaltet werden müssen, um Energie im hinreichenden Maße absorbieren zu können. Darüber hinaus sind derartige Lagerböcke im Allgemeinen - in Fahrzeuglängsrichtung betrachtet - relativ schmal ausgebildet, so dass der Deformationsweg beim Kollabieren der Lagerböcke äußerst beschränkt ist. Schließlich ist es als nachteilig anzusehen, dass auch die seitlichen Lagerarme bzw. die diese mit den jeweils zugehörigen Lagerböcken verbindenden Lageraugen äußerst aufwändig ausgestaltet sein müssen, damit die gewünschte Deformationsreihenfolge erreicht werden kann.

Aufgabe der vorliegenden Erfindung ist es daher, einen Lastkraftwagen der eingangs genannten Art zu schaffen, dessen energieabsorbierende Einrichtung einfacher aufgebaut ist und bei welchem ein größerer Deformationsweg beim Kollabieren der energieabsorbierenden Einrichtung bereitgestellt werden kann.

Diese Aufgabe wird erfindungsgemäß durch einen Lastkraftwagen mit den Merkmalen des Patentanspruchs 1 gelöst. Vorteilhafte Ausgestaltungen mit zweckmäßigen und nicht-trivialen Weiterbildungen der Erfindung sind in den übrigen Patentansprüchen beschrieben.

Bei dem Lastkraftwagen nach der Erfindung ist der energieabsorbierenden Einrichtung der Stützanordnung wenigstens ein Stützelement zugeordnet, über welches ein Stabilisatorrohr der Stabilisatorschwinge am Fahrzeugrahmen abzustützen ist. Mit anderen Worten ist es also erfindungsgemäß vorgesehen, das vorderste Teil der Stabilisatorschwinge - nämlich das Stabilisatorrohr - auf direktem Wege gegenüber dem Fahrzeugrahmen abzustützen. Hierdurch wird zunächst erreicht, dass die seitlichen Stabilisatorarme, die jeweils zugeordneten Lagerkonsolen sowie die dazwischen angeordneten Lageraugen relativ einfach gestaltet werden können, da im Crashfall das Stabilisatorrohr über das wenigstens eine Stützelement am Fahrzeugrahmen abgestützt ist. Darüber hinaus kann das Stützelement in einer entsprechenden Länge gestaltet werden, so dass ein äußerst günstiger Kraftpfad zwischen dem fahrerhausseitigen Stabilisatorrohr und dem Fahrzeugrahmen beim Einleiten von Aufprallenergie erreicht werden kann. Es ist ersichtlich, dass durch die geeignete Dimensionierung des Stützelementes auch auf einfache Weise ein entsprechend gewünschter, vorzugsweise hinreichend großer Deformationsweg der energieabsorbierenden Einrichtung realisiert werden kann.

Natürlich ist klar, dass das Stützelement so zwischen dem mit dem Fahrerhaus mitfedernden Stabilisatorrohr und dem hierzu relativ festen Fahrzeugrahmen angeordnet ist, dass die Lagerbewegung der Stabilisatorschwinge bzw. des Stabilisatorrohrs nicht beeinträchtigt wird.

Als weiter vorteilhaft hat es sich gezeigt, zwei Stützelemente vorzusehen, welche jeweils an einem zugeordneten Rahmenlängsträger des Fahrzeugrahmens angeordnet sind. Hierdurch kann eine äußerst gleichmäßige Verteilung von Aufprallenergie - beispielsweise bei einer Frontalkollision mit geringer Breitenüberdeckung der Unfallpartner - auf die energieabsorbierende Einrichtung bzw. den Fahrzeugrahmen erreicht werden.

Die energieabsorbierende Einrichtung lässt sich auf besonders einfache Weise dadurch realisieren, dass das Stützelement. über eine zugeordnete Crashbox am Fahrzeugrahmen oder einem mit diesem verbundenen Bauteil abgestützt ist. Somit kann auf einfache Weise eine Anordnung geschaffen werden, bei der die Crashboxen im Falle eines Frontalaufpralls kollabieren, während die zugehörigen Stützelemente vorzugsweise zumindest in einer Anfangsphase der Kollision nicht deformiert werden.

Eine besonders gute Krafteinleitung in die jeweilige Crashbox kann dabei realisiert werden, wenn diese an der Oberseite des zugehörigen Rahmenlängsträgers abgestützt ist. Ist dabei an dem dem Stützelement abgewandten Ende der Crashbox ein Anschlag vorgesehen, der seinerseits mit dem zugehörigen Rahmenlängsträger verbunden ist, so kann auf einfache Weise die gegebenenfalls nach dem vollständigen Kollabieren der Crashbox noch vorhandene Aufprallenergie in den Rahmenlängsträger eingeleitet werden.

Um die freie Beweglichkeit der Stabilisatorschwinge bzw. des Stabilisatorrohrs beim Ausführen seiner Lagerbewegung realisieren zu können, ist im Stützelement beispielsweise eine Kulissenöffnung oder ein Langloch vorgesehen, durch das das Stabilisatorrohr hindurchgeführt ist. Alternativ hierzu kann im Bereich des Stützelements - beispielsweise an der Verbindungsstelle zur Crashbox - ein nachgiebiges Gelenkstück, eine Kupplung oder dergleichen vorgesehen sein, über welche einerseits im Kollisionsfall die Aufprallenergie übertragen und andererseits die freie Lagerbewegung des Stabilisatorrohrs gewährleistet werden kann.

In weiterer Ausgestaltung der Erfindung hat es sich als.zudem vorteilhaft gezeigt, wenn die die Stabilisatorschwinge haltenden Lagerkonsolen im Falle eines Frontalaufpralls in Fahrzeuglängsrichtung nach hinten zu verschieben sind. Somit ist es möglich, im Wesentlichen die gesamte vordere Fahrerhauslagerung - gegebenenfalls unter Absorption von Aufprallenergie - nach hinten zu verschieben. Hierzu hat es sich als weiter vorteilhaft gezeigt, die Lagerkonsolen derart mit Verbindungsmitteln gegenüber dem Rahmenlängsträger festzulegen, dass diese bei einer aufprallbedingten Verschiebung der Lagerkonsole lösbar bzw. zerstörbar sind. In weiterer Ausgestaltung der Erfindung ist zwischen den Lagerkonsolen und den zugehörigen Rahmenlängsträgern bzw. mit diesen verbundenen Bauteilen eine weitere energieabsorbierende Einrichtung vorgesehen, so dass auch zwischen den geführten Lagerkonsolen und den zugeordneten Rahmenlängsträgern Energie absorbiert werden kann. Eine derartige Energieabsorption ist beispielsweise über Sollbruchstellen einfach zu realisieren, welche im Bereich des Rahmenlängsträgers oder eine diesem zugeordneten Bauteils eingebracht sind.

Weitere Vorteile, Merkmale und Einzelheiten der Erfindung ergeben sich aus der nachfolgenden Beschreibung eines bevorzugten Ausführungsbeispiels sowie anhand der Zeichnungen; diese zeigen in:
- Fig. 1: eine schematische Seitenansicht auf das vordere Ende eines Fahrzeugrahmens eines Lastkraftwagens, an dessen Oberseite eine Stabilisatorschwinge einer vorderen Fahrerhauslagerung über zugehörige Lagerkonsolen schwenkgehalten und über jeweils seitlich zugeordnete Feder-Dämpfer-Elemente gehalten ist, wobei zwischen einem vorderen Stabilisatorrohr und dem Fahrzeugrahmen eine energieabsorbierende Einrichtung mit jeweils schräg verlaufenden Führungselementen und dahinter angeordneten zugehörigen Crashboxen vorgesehen ist;
- Fig. 2: eine schematische Draufsicht auf das vordere Ende des Fahrzeugrahmens mit der Stützanordnung zur Halterung der Stabilisatorschwinge gemäß Fig. 1; und in
- Fig. 3: eine schematische Perspektivansicht auf eine alternativ gestaltete Lagerkonsole zur Schwenklagerung der Stabilisatorschwinge, wobei die Lagerkonsole in Fahrzeuglängsrichtung nach hinten verschiebbar ist.

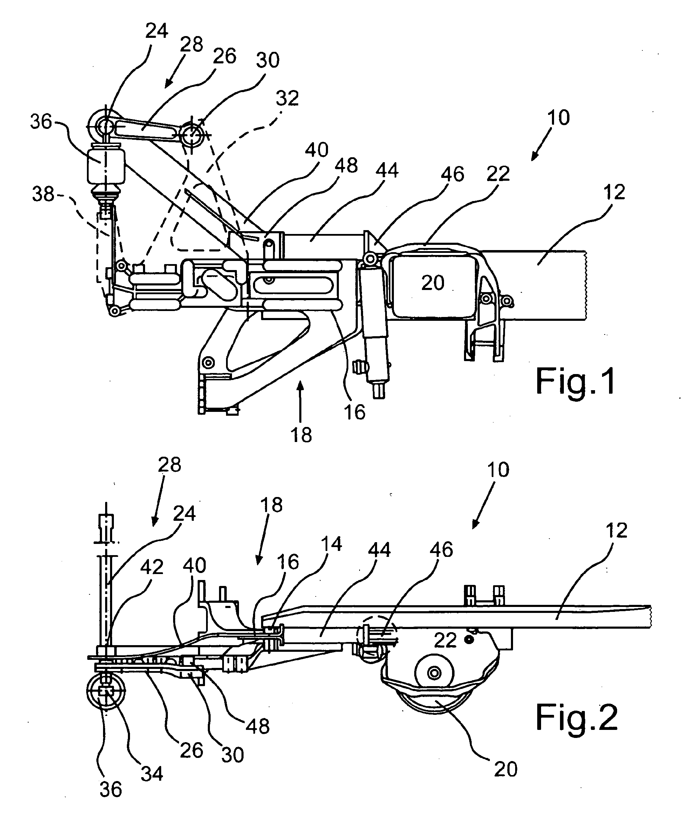

In den Figuren 1 und 2 ist in schematischer Seitenansicht bzw. in schematischer Draufsicht das vordere Ende eines Fahrzeugrahmens 10 eines Lastkraftwagens dargestellt, von dem im Wesentlichen ein - in Vorwärtsrichtung betrachtet - linker Rahmenlängsträger 12 erkennbar ist. Außenseitig des Rahmenlängsträgers ist über ein Verstärkungsteil 14 ein Stegblech 16 eines Vorfederbocks 18 über Schraubverbindungen festgelegt. Der Vorfederbock 18 dient dabei unter anderem zur Halterung bzw. Abstützung eines nicht dargestellten Unterfahrschutzes des Lastkraftwagens. In Fahrzeuglängsrichtung betrachtet hinter dem Vorfederbock 18 ist ein einer Vorderachsanordnung zugeordneter Luftbalg 20 erkennbar, der außenseitig des jeweiligen Rahmenlängsträgers 12 mittels eines Luftbalgträgers 22 befestigt ist.

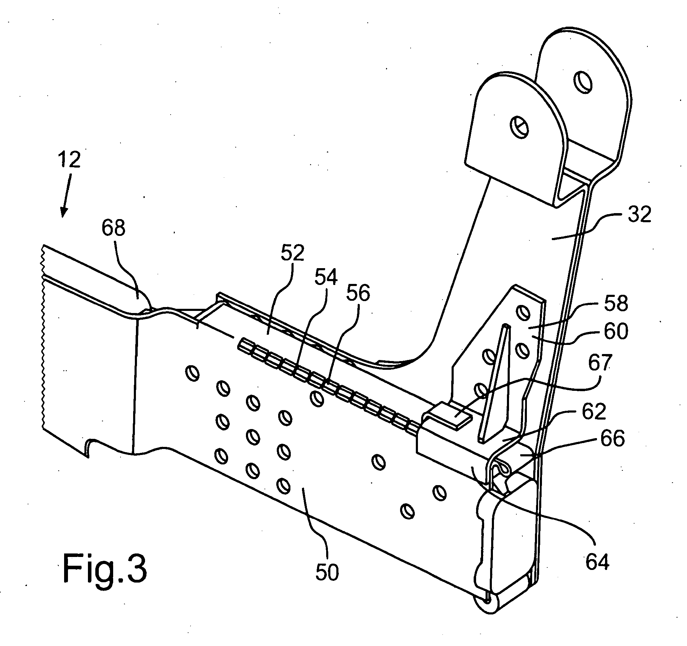

Ein nicht dargestelltes Fahrerhaus des Lastkraftwagens ist an seinem vorderen Ende an einem Stabilisatorrohr 24 gehalten, das seinerseits gemeinsam mit zwei seitlich angeordneten Stabilisatorarmen 26 eine Stabilisatorschwinge 28 bildet. Die beiden Stabilisatorarme 26 sind dabei fest mit dem Stabilisatorrohr 24 verbunden, so dass die Stabilisatorschwinge 28 im Wesentlichen U-förmig gestaltet ist. Die beiden Stabilisatorarme 26 sind über Lageraugen 30 an einer jeweils zugehörigen Lagerkonsole 32 schwenkgehalten, welche ihrerseits mit einem unteren Ende an dem Stegblech 16 des Vorfederbocks 18 auf im Weiteren unter Bezugnahme auf Fig. 3 noch näher erläuterte Weise angeordnet ist. Das Stabilisatorrohr 24 umfasst an seinen beiden äußeren Enden jeweils ein weiteres Lagerauge 34, an welchem jeweils ein Feder-Dämpfer-Element 36 mit einem oberen Ende angelenkt ist. Mit ihren jeweils unteren Enden sind die Feder-Dämpfer-Elemente 36 an einem Haltearm 38 der jeweils zugeordneten Lagerkonsole 32 festgelegt. Es ist ersichtlich, dass die Stabilisatorschwinge 28 somit um die durch die beiden Lageraugen 30 gebildete, in Fahrzeugquerrichtung und waagrecht verlaufende Lagerachse schwenkbar und durch die jeweiligen Feder-Dämpfer-Elemente 36 federnd gegenüber dem Fahrzeugrahmen 10 abgestützt ist. Hierdurch ist die vordere Fahrerhauslagerung des auf dem Stabilisatorrohr 24 ruhenden Fahrerhauses - gehalten durch die aus den beiden Lagerkonsolen 32 gebildete Stützanordnung - gewährleistet.

Neben den beiden seitlich angeordneten Lagerkonsolen 32 umfasst die Stützanordnung zur Halterung der Stabilisatorschwinge 28 zwei Stützelemente 40, welche sich im vorliegenden Ausführungsbeispiel oberhalb der Stegbleche 16 des Vorfederbocks 18 erstrecken. Die Stützelemente 40 sind im vorliegenden Ausführungsbeispiel als verstärkte Blechelemente ausgebildet. Die beiden Stützelemente 40 verlaufen nach vorne schräg oben, wobei diese am vorderen bzw. oberen Ende jeweils eine Kulissenöffnung 42 umfassen, welche im Wesentlichen die Gestalt eines Langlochs haben und durch welche das Stabilisatorrohr 24 mit Spiel hindurchgeführt ist. Insbesondere weisen die Kulissenöffnungen 42 eine hinreichende vertikale Länge auf, so dass das Stabilisatorrohr 24 - zum Ausführen der Lagerbewegung - im Wesentlichen in vertikaler Richtung federn kann. Die Form der Kulissenöffnung 42 wird im Wesentlichen bestimmt durch den Radius der Lagerarme 26, welche um das Lagerauge 30 schwenkgelagert sind. Mit anderen Worten muss die Kulissenöffnung 42 im vorliegenden Ausführungsbeispiel leicht gekrümmt ausgebildet sein, so dass die Stabilisatorschwinge 28 entsprechend schwingen bzw. federnd nachgeben kann.

An dem dem Stabilisatorrohr 24 abgewandten Ende ist jedes Stützelement 40 an einer zugehörigen Crashbox 44 abgestützt, welche ihrerseits an der Oberseite fest mit dem dem jeweiligen Rahmenlängsträger 12 verbundenen Stegblech 16 des Vorfederbocks 18 befestigt ist. Natürlich wäre es in diesem Zusammenhang auch denkbar, dass die Crashbox 44 direkt an der Oberseite des Rahmenlängsträgers 12 angeordnet ist. An ihrem dem Stützelement 40 abgewandten Ende ist die jeweilige Crashbox 44 an einem Anschlag 46 abgestützt, der im vorliegenden Ausführungsbeispiel in den Luftbalgträger 22 integriert und über diesen am entsprechend zugeordneten Rahmenlängsträger 12 festgelegt ist. Im Eckbereich zwischen dem Stützelement 40 und dem vorderen Ende der zugehörigen Crashbox 44 ist eine Verstärkung 48 vorgesehen, welche beispielsweise als nachgiebiges Gelenkstück ausgebildet sein kann. Wird ein derartiges Gelenkstück vorgesehen, so kann beispielsweise auf die Kulissenöffnung 42 am vorderen bzw. oberen Ende jedes der Stützelemente 40 verzichtet werden. In diesem Fall wird das zur Ausführung der Lagerbewegung notwendige Spiel des Stabilisatorrohrs 24 durch das Gelenkstück gewährleistet.

Insbesondere aus Fig. 2 ist erkennbar, dass das Stützelement 40 - in Fahrzeugquerrichtung gesehen - im Wesentlichen Z-förmig gestaltet ist. Mit anderen Worten weiten sich die beiden Stützelemente 40 nach vorne bzw. oben hin in Fahrzeugquerrichtung auf. Das Stützelement 40 schließt sich dabei mit seinem vorderen Ende unmittelbar innenseitig an den zugehörigen Stabilisatorarm 26 der Stabilisatorschwinge 28 an.

Die beiden am jeweils zugehörigen Stegblech 16 des Vorfederbocks 18 befestigten Lagerkonsolen 32 können sowohl fest als auch geführt am Stegblech angeordnet sein. Hierzu zeigt Fig. 3 eine Ausführungsform der Lagerkonsole 32, welche dort in schematischer Perspektivansicht am vorderen Ende des Stegblechs 16 angeordnet ist. Die Lagerkonsole 32 erstreckt sich dabei außenseitig nach unten hin bis auf Höhe des unteren Endes des Stegblechs 16. Dieses umfasst an seinem hinteren Ende einen sich in Fahrzeughochrichtung und etwa vertikal verlaufenden Gurt 50, zu dem ein einteilig mit diesem ausgebildeter oberer Gurt 52 etwa senkrecht bzw. horizontal verläuft. Im Eckbereich zwischen den beiden Gurten 38, 40 sind eine Reihe von Sollbruchstellen 54 in das Stegblech 16 eingebracht, welche durch hintereinander angeordnete, im Wesentlichen rechteckförmige Ausnehmungen 56 gebildet sind. An der Innenseite der Lagerkonsole 32 ist ein Führungselement 58 erkennbar, welches im Wesentlichen S-förmig ausgestaltet ist. Das Führungselement 58 ist dabei mit einem Anlageteil 60 fest an der Lagerkonsole 32 angebunden. Weiter umfasst das Führungselement 58 einen Stützteil 62, mit welchem die Lagerkonsole 32 in Fahrzeughochrichtung am oberen Gurt 52 des Stegblechs 16 abgestützt ist. An den Stützteil 62 schließt sich unterseitig ein parallel bzw. in Anlage zum vertikalen Gurt 50 des Stegblechs 16 verlaufender Führungsteil 64 an, der seinerseits keine Verbindungsmittel zum Stegblech 16 hin aufweist.

Der obere Gurt 52 des Stegblechs 16 ist nach hinten hin gegenüber dem vertikalen Gurt 50 länger ausgebildet und im Bereich eines Umschlags 66 derart nach oben hin umgebogen worden, dass der obere Gurt 52 unterhalb des Stützteils 62 doppelt ausgebildet ist, wobei ein oberer Teil des oberen Gurts 52 auf einem unteren Teil aufliegt. Der obere Teil ist bis zu einer Schlepplasche 68 verlängert, welche den Stützteil 62 des Führungselementes 58 an dessen vorderem Ende umgreift. Die Lagerkonsole 32 ist mit dem Stegblech 28 über ein Versteifungsteil 68 verbunden, wobei diese beiden Teile gemeinsam an dem Stegblech 16 über Verbindungsmittel angeordnet sind. Im Falle einer Frontalkollision und einer unfallbedingten Zurückverschiebung der Lagerkonsole 32 können die Verbindungsmittel beispielsweise an der flächigen Stoßstelle zwischen dem Versteifungsteil 68 und dem Stegblech 16 an Sollbruchstellen reißen bzw. brechen.

Wird nun das Fahrerhaus bzw. die Fahrerhauslagerung mit der Stabilisierungsschwinge 28 infolge eines Frontalaufpralls mit einer in Fahrzeuglängsrichtung nach hinten wirkenden Aufprallkraft beaufschlagt, so lösen sich die Verbindungsmittel zwischen der Lagerkonsole 32 und dem Stegblech 16, so dass sich die Lagerkonsole 32 nach hinten bewegen kann. Setzt sich nun die Lagerkonsole 32 in Bewegung, so schleppt diese über die Schlepplasche 67 den oberen Teil des oberen Gurts 52 mit sich. Hierdurch wird der Umschlag 66 des oberen Gurts 52 ebenfalls nach hinten mitgenommen, so dass dieser im Verlauf der Rückverlagerung der Lagerkonsole 32 die erste Sollbruchstelle 54 erreicht hat. Nach Überwindung einer vorbestimmten Reiß- bzw. Brechkraft reißen bzw. brechen dann die einzelnen Sollbruchstellen 54, so dass sich die Reihe dieser Sollbruchstellen 54 von vorne nach hinten aufknöpft. Es ist ersichtlich, dass hierdurch die auf die Lagerkonsole 32 einwirkende Aufprallenergie in großem Maße abgebaut werden kann.

Die Führung der Lagerkonsole sowohl in Fahrzeughochrichtung wie auch in Fahrzeugquerrichtung wird dabei durch den Stützteil 62 bzw. den Führungsteil 64 des fest mit der Lagerkonsole 32 verbundenen Führungselementes 58 gewährleistet. Somit ist sichergestellt, dass die Lagerkonsole 32 lediglich eine translatorische Verlagerung in Fahrzeuglängsrichtung nach hinten vornimmt, während deren Position in Fahrzeughochrichtung bzw. in Fahrzeugquerrichtung auf derselben Höhe bzw. Breite verbleibt.

## Patentansprüche

1. Lastkraftwagen mit einer vorderen Fahrerhauslagerung eines Fahrerhauses an einem Fahrzeugrahmen (10), an dem eine Stabilisatorschwinge (28) über Lagerkonsolen (32) einer Stützanordnung gehalten ist, welche eine energieabsorbierende Einrichtung zur Aufnahme von Aufprallenergie infolge eines Frontalaufpralls des Lastkraftwagens im Bereich des Fahrerhauses umfasst,
**dadurch gekennzeichnet,**
**dass** der energieabsorbierenden Einrichtung der Stützanordnung wenigstens ein Stützelement (40) zugeordnet ist, über welches ein Stabilisatorrohr (24) der Stabilisatorschwinge (28) am Fahrzeugrahmen (10) abzustützen ist.

2. Lastkraftwagen nach Anspruch 1,
**dadurch gekennzeichnet,**
**dass** die energieabsorbierende Einrichtung zwei Stützelemente (40) umfasst, welche jeweils einem Rahmenlängsträger (12) des Fahrzeugrahmens (10) zugeordnet sind.

3. Lastkraftwagen nach Anspruch 1,
**dadurch gekennzeichnet,**
**dass** das Stützelement (40) über eine zugeordnete Crashbox (44) der Stützanordnung am Fahrzeugrahmen (10) oder einem mit diesem verbundenen Bauteil (Vorfederbock 18) abgestützt ist.

4. Lastkraftwagen nach den Ansprüchen 1, 2 oder 3,
**dadurch gekennzeichnet,**
**dass** die Crashboxen (44) an der Oberseite eines zugehörigen Rahmenlängsträgers (12) oder eines mit diesem verbundenen Bauteils (Vorfederbock 18) abgestützt sind.

5. Lastkraftwagen nach Anspruch 3,
**dadurch gekennzeichnet,**
**dass** die Crashboxen (44) an ihren dem jeweiligen Stützelement (40) abgewandten Ende an einen zugeordneten Anschlag (46) angrenzen, welcher am zugehörigen Rahmenlängsträger (12) oder an einem mit diesem verbundenen Bauteil (Vorfederbock 18) festgelegt ist.

6. Lastkraftwagen nach Anspruch 5,
**dadurch gekennzeichnet,**
**dass** der Anschlag (46) für die Crashbox (44) in einen Luftbalgträger (22) integriert ist, welcher am zugehörigen Rahmenlärigsträger (12) oder an einem mit diesem verbundenen Bauteil (Vorfederbock 18) festgelegt ist.

7. Lastkraftwagen nach Anspruch 1,
**dadurch gekennzeichnet,**
**dass** das Stabilisatorrohr (24) zum Ausführen der Lagerbewegung gegenüber dem Stützelement (40) bewegbar ist.

8. Lastkraftwagen nach Anspruch 7,
**dadurch gekennzeichnet,**
**dass** das Stützelement (40) eine Kulissenöffnung (42) umfasst, durch welche das Stabilisatorrohr (24) hindurchgeführt ist.

9. Lastkraftwagen nach Anspruch 7,
**dadurch gekennzeichnet,**
**dass** im Bereich des Stützelements (40) ein nachgiebiges Gelenkstück oder dgl. vorgesehen ist.

10. Lastkraftwagen nach Anspruch 1,
**dadurch gekennzeichnet,**
**dass** die Lagerkonsolen (32) entlang von jeweils zugeordneten Führungen in Fahrzeuglängsrichtung nach hinten zu verschieben sind.

11. Lastkraftwagen nach Anspruch 10,
**dadurch gekennzeichnet,**
**dass** jede der Lagerkonsolen (32) mit einem dem jeweiligen Rahmenlängsträger (12) zugeordneten Stegblech (16) über Verbindungsmittel festgelegt ist, wobei die Verbindungsmittel zur aufprallbedingten Verschiebung der Lagerkonsolen (32) lösbar ausgebildet sind.

12. Lastkraftwagen nach Anspruch 11,
**dadurch gekennzeichnet,**
**dass** die Führungen jeweils ein der entsprechenden Lagerkonsole (32) zugeordnetes Führungselement (58) umfassen, über welches die Lagerkonsole (32) am zugehörigen Stegblech (16) des Rahmenlängsträgers (12) in Fahrzeughochrichtung abgestützt und in Fahrzeugquerrichtung geführt ist.

13. Lastkraftwagen nach Anspruch 11,
**dadurch gekennzeichnet,**
**dass** das Stegblech (16) des jeweiligen Rahmenlängsträgers (12) mit einer Reihe von Sollbruchstellen (54) versehen ist.

14. Lastkraftwagen nach Anspruch 11,
**dadurch gekennzeichnet,**
**dass** die Führungselemente (58) der Lagerkonsolen (32) fest mit zugeordneten oberen Gurten (52) der Stegbleche (16) verbunden sind.

## Claims

1. Lorry with front mounting of a driver's cab on a vehicle frame (10) on which a stabiliser link (28) is held by means of bearing brackets (32) of a support arrangement including an energy-absorbing device for the absorption of impact energy generated by a head-on collision of the lorry in the region of the driver's cab,
**characterised in that**
at least one support element (40) by means of which a stabiliser tube (24) of the stabiliser link (28) is to be supported on the vehicle frame (10) is assigned to the energy-absorbing device of the support arrangement.

2. Lorry according to claim 1,
**characterised in that**
the energy-absorbing device includes two support elements (40), each of which is assigned to a side member (12) of the vehicle frame (10).

3. Lorry according to claim 1,
**characterised in that**
the support element (40) is supported on the vehicle frame (10) or on a component (pre-spring support 18) joined thereto by way of a crash box (44) of the support arrangement.

4. Lorry according to claims 1, 2 or 3,
**characterised in that**
the crash boxes (44) are supported on the top of an associated side member (12) or on a component (pre-spring support 18) joined thereto.

5. Lorry according to claim 3,
**characterised in that**
the ends of the crash boxes (44) which are remote from the respective support element (40) adjoin an assigned stop (46) fixed to the associated side member (12) or to a component (pre-spring support 18) joined thereto.

6. Lorry according to claim 5,
**characterised in that**
the stop (46) for the crash box (44) is integrated into an air bellows support (22) fixed to the associated side member (12) or to a component (pre-spring support 18) joined thereto.

7. Lorry according to claim 1,
**characterised in that**
the stabiliser tube (24) is movable to perform the bearing movement relative to the support element (40).

8. Lorry according to claim 7,
**characterised in that**
the support element (40) includes a gate opening (42) through which the stabiliser tube (24) passes.

9. Lorry according to claim 7,
**characterised in that**
a resilient joint piece or the like is provided in the region of the support element (40).

10. Lorry according to claim 1,
**characterised in that**
the bearing brackets (32) are capable of being displaced towards the rear in the longitudinal direction of the vehicle along guides assigned thereto.

11. Lorry according to claim 10,
**characterised in that**
each of the bearing brackets (32) is fixed with a web plate (16) assigned to the respective side member (12) by way of connecting means, the connecting means being designed to be releasable to permit the displacement of the bearing brackets (32) in a collision.

12. Lorry according to claim 11,
**characterised in that**
the guides include guide elements (58) assigned to the respective bearing brackets (32), by way of which the bearing bracket (32) is supported in the vertical direction of the vehicle on the associated web plate (16) of the side member (12) and guided in the transverse direction of the vehicle.

13. Lorry according to claim 11,
**characterised in that**
the web plate (16) of the respective side member (12) has a number of predetermined breaking points (54).

14. Lorry according to claim 11,
**characterised in that**
the guide elements (58) of the bearing brackets (32) are permanently joined to assigned upper flanges (52) of the web plates (16).

## Revendications

1. Poids-lourd équipé d'un support avant de cabine de conducteur sur un châssis (10) de véhicule, sur lequel est maintenue une bielle (28) oscillante stabilisatrice par le biais de consoles (32) d'appui d'un arrangement de soutien qui comprend un dispositif d'absorption d'énergie destiné à absorber l'énergie produite par une collision frontale du poids-lourd dans la zone de la cabine de conducteur, **caractérisé en ce que** le dispositif d'absorption d'énergie de l'arrangement de soutien est associé à au moins un élément (40) de soutien par le biais duquel un tube (24) stabilisateur de la bielle (28) oscillante stabilisatrice doit être soutenu sur le châssis (10) de véhicule.

2. Poids-lourd selon la revendication 1, **caractérisé en ce que** le dispositif d'absorption d'énergie comprend deux éléments (40) de soutien, lesquels sont respectivement associés à un longeron (12) du châssis (10) du véhicule.

3. Poids-lourd selon la revendication 1, **caractérisé en ce que** l'élément (40) de soutien est soutenu par le biais d'un boîtier (44) amortisseur d'impact associé de l'arrangement de soutien sur le châssis (10) du véhicule ou à un élément (support de ressort avant 18) relié à celui-ci.

4. Poids-lourd selon les revendications 1, 2 ou 3, **caractérisé en ce que** les boîtiers (44) amortisseurs d'impact sont supportés sur le côté supérieur d'un longeron (12) de châssis correspondant ou d'un élément (support de ressort avant 18) relié à celui-ci.

5. Poids-lourd selon la revendication 3, **caractérisé en ce que** les boîtiers (44) amortisseurs d'impact sur leur extrémité opposée à chaque élément (40) de soutien sont adjacents à une butée (46) associée, laquelle est fixée sur le longeron (12) de châssis correspondant ou sur un élément (support de ressort avant 18) relié à celui-ci.

6. Poids-lourd selon la revendication 5, **caractérisé en ce que** la butée (46) pour les boîtiers (44) amortisseurs d'impact est intégrée dans un support de soufflet à air (22), lequel est fixé sur le longeron (12) de châssis correspondant ou sur un élément (support de ressort avant 18) relié à celui-ci.

7. Poids-lourd selon la revendication 1, **caractérisé en ce que** le tube stabilisateur (24) peut se déplacer pour effectuer le mouvement du support par rapport à l'élément (40) d'appui.

8. Poids-lourd selon la revendication 7**, caractérisé en ce que** l'élément (40) d'appui comprend une ouverture (42) coulissante, au travers de laquelle passe le tube stabilisateur (24).

9. Poids-lourd selon la revendication 7, **caractérisé en ce que** dans la zone de l'élément (40) d'appui est prévue une pièce d'articulation élastique ou similaire.

10. Poids-lourd selon la revendication 1, **caractérisé en ce que** les consoles (32) d'appui doivent être déplacées vers l'arrière le long de guides associés correspondants dans la direction longitudinale du véhicule.

11. Poids-lourd selon la revendication 10, **caractérisé en ce que** chacune des consoles (32) d'appui est fixée à une tôle d'entretoise (16) associée au longeron (12) de châssis correspondant par le biais d'éléments de liaison, les éléments de liaison étant amovibles sont destinées à déplacer les consoles (32) d'appui au moment de la collision.

12. Poids-lourd selon la revendication 11, **caractérisé en ce que** les guides comprennent respectivement un élément de guidage (58) associé à la console (32) d'appui correspondante, par lequel la console (32) d'appui est supportée sur la tôle d'entretoise (16) correspondante du longeron (12) de châssis dans une direction verticale du véhicule et est guidée dans la direction transversale du véhicule.

13. Poids-lourd selon la revendication 11, **caractérisé en ce que** la tôle (16) d'entretoise du longeron (12) de châssis correspondant est pourvue d'une rangée de points de rupture (54).

14. Poids-lourd selon la revendication 11, **caractérisé en ce que** les éléments de guidage (58) des consoles (32) d'appui sont reliées de manière fixe aux bandes supérieures associées des tôles (16) d'entretoise.
